(19) Europäisches Patentamt
European Patent Office
Office européen des brevets

(11) **EP 2 734 651 B1**

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(21) Anmeldenummer: **11738170.7**

(22) Anmeldetag: **22.07.2011**

(51) Int Cl.:
**C21C 1/08** (2006.01)

(86) Internationale Anmeldenummer:
**PCT/EP2011/003700**

(87) Internationale Veröffentlichungsnummer:
**WO 2013/013681 (31.01.2013 Gazette 2013/05)**

(54) **VERFAHREN ZUR HERSTELLUNG VON GUSSEISEN MIT VERMICULARGRAPHIT**

METHOD FOR PRODUCING CAST IRON HAVING VERMICULAR GRAPHITE

PROCÉDÉ DE FABRICATION DE FONTE À GRAPHITE VERMICULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.05.2014 Patentblatt 2014/22**

(73) Patentinhaber: **Neue Halberg Guss GmbH 66130 Saarbrücken (DE)**

(72) Erfinder: **RADEBACH, Dirk 42899 Remscheid (DE)**

(74) Vertreter: **Bockhorni & Brüntjen Partnerschaft Patentanwälte mbB Elsenheimerstraße 49 80687 München (DE)**

(56) Entgegenhaltungen:
**US-A- 3 670 558      US-A- 4 164 148
US-A- 5 758 706**

EP 2 734 651 B1

**Beschreibung**

Die Erfindung betrifft ein Verfahren zur Herstellung von Gusseisen und ein mit dem Verfahren hergestelltes Gussteil.

Gussteile aus Gusseisen mit Vermiculargraphit sind Stand der Technik und werden unter anderem bei der Herstellung von Brennkraftmaschinen verwendet, beispielsweise als Gehäuse für Zylinderkurbeln. Gusseisen mit Vermiculargraphit wird auch im deutschsprachigen Raum mit dem Kürzel "GJV" und im englischsprachigen Raum mit dem Kürzel "CGI" ("compacted graphite iron") bezeichnet und ist international genormt in der ISO 16112. Die Norm schreibt vor, dass die Graphitphase des Gefüges des Gusseisens aus maximal 20 % kugelig geformtem Graphit bestehen soll und der restliche Graphit vermicular geformt sein soll.

Um Vermiculargraphit aus einer Gusseisenschmelze zu erhalten, werden zusätzliche Elemente der Schmelze zugegeben, insbesondere Magnesium (Mg). Weitere Möglichkeiten bestehen in der Verwendung von Lanthan (La) und Cerium (Ce). Problematisch ist, dass in der Schmelze üblicherweise Sauerstoff und Schwefel (auch nach einer vorausgehenden weitgehenden Entschwefelung) vorliegen, die mit dem eingebrachten Magnesium reagieren, so dass die Menge an ungebundenem Magnesium, welches die vermiculare bzw. kugelige Ausbildung des Graphits bewirkt, verringert wird.

Herkömmlicherweise wird für die Bestimmung der notwendigen Menge an Magnesium der Schwefelgehalt in der Schmelze vergleichsweise genau gemessen. Allerdings wird Sauerstoff nicht immer berücksichtigt, so dass es zu Fehlern bei der Dosierung kommen kann. Verbesserte Verfahren zur Berücksichtigung des Sauerstoffs verwenden eine Messung der Sauerstoffaktivität über eine Vibrationslanze bei Normaltemperatur um die Auswirkung der Bindung des Magnesiums durch Sauerstoff zu berücksichtigen. Dabei wird der gemessene Sauerstoffanteil auf eine bestimmte Normaltemperatur, beispielsweise 1420 °C, bezogen. Dabei macht man es sich zu nutze, dass bei Zugabe von Magnesium in die Schmelze die Sauerstoffaktivität abnimmt und außerdem der Gehalt an freiem Magnesium zunimmt. Auf diese Weise kann über die Sauerstoffaktivität, insbesondere bezogen auf 1420 °C, auf eine Dosierung des Magnesiums geschlossen werden.

Allerdings hat sich gezeigt, dass auch die derart verbesserte Dosierung des Magnesiums nicht immer ausreicht, um zuverlässig GJV herzustellen. Ein Hintergrund ist, dass in die Schmelze weitere Legierungsmittel zugegeben werden, beispielsweise Impfmittel zur Unterdrückung der Bildung von Zementit ($Fe_3C$).

Durch die Messung der Sauerstoffaktivität nach dem Stand der Technik wird das Gleichgewicht $2Mg + O_2 \leftrightarrow 2MgO$ charakterisiert. Mit dieser Gleichung können die Verhältnisse der Gefügebildung jedoch nicht ausreichend genau erfasst werden.

Zudem ist der Umgang von Testschmelzen und deren Abkühlkurven meist nicht sehr zuverlässig, um die bei GJV zwingend durch die Norm ISO 16112 vorgeschriebene Graphitform sicherzustellen. Insbesondere sagen einfache Abkühlkurven (einfache thermische Analyse von einer Testschmelze in einem Tiegel mit einer Kammer und mit einem Thermoelement) nur wenig über die Morphologie des gebildeten Graphits aus. Insofern wurden die Analyseverfahren weiterentwickelt (thermische Analyse von einer Testschmelze in einem Tiegel mit einer Kammer und mit 2 Thermoelementen), ohne jedoch das Ansprechverhalten einer Schmelzcharge auf ein individuell gewähltes Impfmittel ausreichend zu berücksichtigen (kein Impfmittel im Tiegel), was zu einer deutlichen Unsicherheit in der Dosierung des Impfmittels im Verfahren führt.

Das Einhalten der Grenze für den Kugelgraphitanteil nach ISO 16112 ist durch die bisher bekannte Ausführung der Sauerstoffaktivitätsmessung oder der thermischen Analyse wegen der Langzeitvarianz der Wirksamkeit des Impfmittels über viele Schmelzchargen hinweg nicht möglich. Dies ist aber wichtig für die Gefügeausbildung und sichere Herstellung von GJV. Unterschiedliche chemische Zusammensetzungen des Impfmittels beeinflussen über die Keimbildung die Graphitform. So ist z. B. bekannt, dass Mn zusammen mit S (als MnS) als Keim hauptsächlich bei lamellarer Ausbildung des Graphits vorliegt, während bei vermicularer und kugeliger Ausbildung hauptsächlich MgS als Keim gefunden wurde. Allerdings ist es möglich, dass trotz gleicher Sauerstoffaktivität eine unterschiedliche Keimanzahl und Keimbildungsrate vorliegt. Es kann also von einer bekannten Sauerstoffaktivität nicht direkt auf die Wirksamkeit des Impfmittels bei mehreren Schmelzchargen über lange Produktionszeiträume geschlossen werden.

Über viele Schmelzchargen gesehen treten Varianzen im Keimhaushalt stärker in den Vordergrund und führen zu Unsicherheiten bei der Dosierung des Impfmittels beim Abguss des Bauteils. Diese Varianzen führen wiederum dazu, dass Abkühlkurven, aufgenommen in Testtiegeln ohne Impfmittel, nicht mehr auswertbar sind. Charakteristische Kurvenpunkte fallen zusammen, so dass nach dem Stand der Technik bekannte Regressionen die Vorhersage der Gefügeausbildung im Bauteil nicht mehr gestatten. Das Messfenster muss aber auswertbar erhalten bleiben.

Aus der US 5,758,706 ist ein Verfahren zur Bestimmung einer Impfmittelmenge bei der Herstellung von Gußeisen bekannt, wobei in bestimmten Zeitintervallen (periodisch) Proben aus einer Schmelze entnommen werden und aus einer Abkühlkurve ein Kohlenstoffäquivalent bestimmt wird. Weichen das Kohlenstoffäquivalent und/oder die strukturellen Eigenschaften der Probe von bekannten Werten um einen bestimmten Wert oder mehr ab, so wird entweder das Kohlenstoffäquivalent der Schmelze entsprechend angepasst oder es wird ein strukturmodifizierendes Agens oder ein Impfmittel zur Schmelze hinzugegeben. Das Verfahren gemäß der US 5,758,706 ist sehr komplex und führt ebenfalls zu Varianzen in den Ergebnissen.

Aufgabe der Erfindung ist es, die Zuverlässigkeit der Bildung von GJV aus der Schmelze zu verbessern, insbesondere ist es Aufgabe der Erfindung ein entsprechend verbessertes Herstellverfahren anzugeben.

Die Aufgabe wird mit einem Verfahren gemäß Anspruch 1 gelöst.

Insbesondere wird die Aufgabe durch ein Verfahren zur Herstellung von Gusseisen, insbesondere von Gusseisen mit Vermiculargraphit gelöst, mit den Schritten: Herstellen einer Schmelze, Ermitteln eines Schwefelgehalts der Schmelze und Ermitteln einer Normaltemperatur-bezogenen Sauerstoffaktivität (aO-Normaltemperatur) der Schmelze, sowie Bestimmung einer Menge eines zuzugebenden strukturmodifizierenden Agens oder mehrerer zuzugebender strukturmodifizierender Agenzien auf Basis des Schwefelgehalts der Schmelze und der Normaltemperatur-bezogenen Sauerstoffaktivität der Schmelze, Abtrennen zweier Teile der Schmelze (die vorzugsweise in einem oder mehreren Tiegeln abkühlen), als erste und zweite Testschmelze. Der ersten Testschmelze wird vor Aufnahme der Punkte der Abkühlkurve Impfmittel zugegeben, so dass die erste Testschmelze geimpft und die zweite Testschmelze ungeimpft ist. Während des Abkühlens der Testschmelzen werden mit einem Temperaturmessgerät mindestens zwei Punkte von jeder der Abkühlkurven aufgenommen. Dabei können die jeweiligen Punkte der Abkühlkurven bei der ersten und zweiten Testschmelze unterschiedlich sein. Schließlich wird eine Impfmittelmenge eines Impfmittels in Abhängigkeit von den ermittelten Punkten der Abkühlkurven anhand einer Impfmittelformel zugegeben. Die Impfmittelformel weist mindestens zwei Kontrollkoeffizienten auf. Die Kontrollkoeffizienten werden empirisch ermittelt. Es wurde erstmals erkannt, dass die Qualität von Gusseisen maßgeblich optimiert werden kann, wenn auf mehrere Parameter gleichzeitig reagiert wird. Dies sind vor allem der Schwefelgehalt, die Normaltemperatur-bezogenen Sauerstoffaktivität der Schmelze und das Abkühlverhalten derselben. Auf die beiden ersten Parameter wird erfindungsgemäß mit der Zugabe von einem oder mehreren strukturmodifizierenden Agenzien reagiert, während der letztgenannte Parameter eine Impfmittelzugabe auslöst. Durch die Kombination der Reaktionen auf die wichtigsten Parameter erhält man ein im Gegensatz zum Stand der Technik in zuverlässiger Weise verbessertes Ergebnis.

Durch Verwendung eines Impfmittels im Tiegel wird die Aussage über den Keimhaushalt zuverlässiger und der auswertbare Bereich gegenüber bekannten Verfahren wesentlich erweitert.

Vorzugsweise ist der weitere Schritt vorgesehen, eine Schwefelaktivität als einen weiteren maßgeblichen Parameter der Schmelze zu ermitteln.

Mit dem neuen Verfahren wird dann also das Gleichgewicht $3Mg + O_2 + S \leftrightarrow 2MgO + MgS$ beurteilt. Es wird ein Gesamtaktivitätsparameter zur verbesserten Prozesssteuerung benutzt. Dieser Gesamtaktivitätsparameter setzt sich zusammen aus Messung der Sauerstoffaktivität, Messung der Schwefelaktivität und der Temperatur. Die Schwefelaktivität ist nicht identisch mit der Messung des Schwefelgehalts (die Messung des Schwefelgehalts nach dem Stand der Technik wird mittels Spektrometer an einer $Fe_3C$-Probe bei Raumtemperatur gemessen). Die Zustandsform des Messobjekts unterscheidet sich wesentlich von der Schmelze und dem daraus gegossenen Bauteil. Insbesondere soll das Bauteil kein $Fe_3C$ enthalten.

Die Messung der Schwefelaktivität einer Schmelze ist ohne Weiteres ausführbar und ist bei Stahlschmelzen bereits für sich bekannt. Stahl differenziert sich jedoch eindeutig von Gusseisen mit Vermiculargraphit durch den Kohlenstoffgehalt, Siliziumgehalt, Magnesiumgehalt und durch die Verhältnisse der Graphitkeimbildung. Die Wichtigkeit der Schwefelaktivität in Verbindung mit der Dosierung von strukturmodifizierenden Agenzien wird bisher durch den Stand der Technik nicht erkannt. Dementsprechend wird bei den bekannten Verfahren zur Herstellung von GJV die Messung der Schwefelaktivität nicht zur Steuerung der Dosierung von strukturmodifizierenden Agenzien benutzt.

In einer bevorzugten Ausführungsform der Erfindung werden bei der ersten und bei der zweiten Testschmelze unterschiedliche Punkte der jeweiligen Abkühlkurve aufgenommen, wobei unterschiedliche Punkte sich dadurch auszeichnen, dass sie an verschiedenen markanten Punkten der Abkühlkurve, beispielsweise Wendepunkten oder lokalen Extremwerten aufgenommen werden. Erfindungsgemäß wird eine Impfmittelmenge eines Impfmittels in Abhängigkeit von den ermittelten Punkten der Abkühlkurven anhand einer Impfmittelformel zugegeben.

Da die Abkühlkurven eine Aussage über Gefügekennwerte der jeweiligen erstarrten Testschmelzen zulassen, kann auf diese Weise das Impfmittel zuverlässig dosiert werden. Außerdem wird auf diese Weise berücksichtigt, dass das Impfmittel einen Einfluss auf die Bindung der strukturmodifizierenden Agenzien, wie beispielsweise Magnesium, aufweist. Dieser Einfluss wird durch die Impfmittelformel und durch die Messung der Punkte der Abkühlkurven berücksichtigt, so dass die Bildung von Vermiculargraphit sichergestellt wird.

Vorzugsweise sind folgende zusätzlichen Schritte vorgesehen: Dosieren einer Agenzienmenge von strukturmodifizierenden Agenzien in Abhängigkeit von dem Schwefelgehalt und/oder der Schwefelaktivität anhand einer Schwefelgehaltsformel und/oder von der Normaltemperatur-bezogenen Sauerstoffaktivität anhand einer Sauerstoffaktivitätsformel und Zugeben der Agenzienmenge.

Bevorzugt wird die Normaltemperatur-bezogene Sauerstoffaktivität der Schmelze auf eine Normaltemperatur bezogen, welche zwischen 1380 °C und 1450 °C, bevorzugt zwischen 1400 und 1440 °C, noch bevorzugter zwischen 1410 und 1430 °C liegt. Zur Messung der Normaltemperatur-bezogenen Sauerstoffaktivität wird bevorzugt eine Vibrationslanze benutzt, die nach analogem Prinzip einer Lanze für Sauerstoffaktivität bei Stahlschmelzen konstruiert ist. Solche Lanzen weisen einen Elektrolytsensor auf, welcher in Abhängigkeit der Sauerstoffaktivität eine abgreifbare Spannung erzeugt. Vorzugsweise wird dann in Abhängigkeit des Schwefelgehalts und/oder der Schwefelaktivität und/oder der Normaltemperatur-bezogenen Sauerstoffaktivität anhand einer Schwefelgehaltsformel und/oder einer Sauerstoffaktivitätsformel die Agenzienmenge dosiert und zugegeben.

Vorteilhafterweise wird als strukturmodifizierende Argens bzw. Agens (oder auch Behandlungsmittel) ein Einkomponentendesoxidationsmittel oder ein Quasi-Einkomponentendesoxidationsmittel verwendet, bevorzugtes Einkomponentendesoxidationsmittel ist reines Magnesium, wobei "rein" als ein Reinheitsgrad von mindestens 98%, bevorzugt mindestens 99 % definiert ist. Bevorzugte Quasi-Einkomponentendesoxidationsmittel sind Kupfer-Magnesium (CuMg) oder Eisen-Magnesium (FeMg), wobei bei diesen genannten Quasi-Einkomponentendesoxidationsmitteln die jeweils zweiten Elemente neben dem Magnesium eine sehr geringe Sauerstoffaffinität aufweisen, so dass der Einfluss der Sauerstoffaktivität vernachlässigbar ist bei der Dosierung der strukturmodifizierenden Agenzien, das heißt des Desoxidationsmittels.

Daneben können im Rahmen der Erfindung auch Mehrkomponentendesoxidationsmittel verwendet werden, insbesondere Eisen-Magnesium-Silizium-Vorlegierungen (FeMgSi). Dabei sind die Wirkungen der Nebendesoxidation, insbesondere neben dem Magnesium, beispielsweise durch Silizium, gut reproduzierbar, so dass der Einfluss der Nebendesoxidation durch empirisch ermittelte Formeln bei der Magnesiumzugabe berücksichtig werden kann. Die Zugabe der strukturmodifizierenden Agenzien, wie beispielsweise Magnesium erfolgt beispielsweise über eine Drahtinjektion oder durch Übergießen, wie dies aus dem Stand der Technik bekannt ist.

Vorzugsweise wird die Normaltemperatur-bezogene Sauerstoffaktivität der Schmelze direkt gemessen. Dies kann beispielsweise mit der oben genannten Vibrationslanze durchgeführt werden. Der Vorteil ist, dass auf diese Weise Nebendesoxidations-Prozesse mitberücksichtigt werden können.

Erfindungsgemäß wird nur der ersten Testschmelze Impfmittel zugegeben, so dass die erste Testschmelze geimpft und die zweite Testschmelze ungeimpft ist. Auf diese Weise kann der Einfluss des Impfmittels genau erfasst werden. Vorteilhafterweise werden der ersten und der zweiten Testschmelze vor Aufnahme der Punkte der Abkühlkurve unterschiedliche Mengen Impfmittel zugegeben. Die Testschmelzen werden vorzugsweise in Probetiegeln oder Kammern eines Probetiegels eingebracht, wobei in dem Probetiegel oder der Kammer der ersten Testschmelze Impfmittel vorhanden ist. In dem Probetiegel oder der Kammer ist ein Temperaturmessgerät in Form eines Temperaturfühlers vorgesehen, welcher Punkte der jeweiligen Abkühlkurve aufnimmt.

Das Abtrennen von zwei Testschmelzen und deren Präparation mit und ohne Impfmittel (dies entspricht dem Bereitstellen zweier unterschiedlicher Konzentrationen) stellt eine Möglichkeit dar, Auswirkung des Impfmittels auf das gegossene Bauteil zu erfassen. Insbesondere wenn der beim Abguss des Bauteils verwendete Typ des Impfmittels in zwei unterschiedlichen Konzentrationen auch in der Kammer des Probetiegels mit der Testschmelze verwendet wird. Durch die beiden Eckpunkte bzw. Fixpunkte in den möglichen Dosiermengen, ohne Impfmittel und mit viel Impfmittel in den beiden Kammern, und den zugehörigen Abkühlkurven wird die Auswirkung auf das gegossene Bauteil charakterisiert. Dies gilt insbesondere für die Auswirkung auf die Gefügebildung.

Vorzugsweise entspricht der erste der Punkte der Abkühlkurve der ersten Testschmelze der Liquidustemperatur der im ersten Tiegel bzw. ersten Kammer erstarrenden Schmelze. Wenn die Testschmelze in den Probetiegel oder die Kammer eingebracht wird, wird zunächst ein Maximum der erfassten Temperatur erreicht, wenn der Temperaturmessfühler die Temperatur der zugegebenen Schmelze annimmt. Anschließend erfolgt eine Abkühlung bis zu einem lokalen Minimum (besonders bei untereutektischen und auch noch bei naheutektischen Gusseisen-Schmelzen) oder zu einem Plateau oder zumindest bis zu einer Phase einer verlangsamten Abkühlung. Der erste Wendepunkt nach diesem Temperatur-Minimum oder der Wendepunkt am Ende der verlangsamten Abkühlphase zeigt die Liquidustemperatur an. Die Zusammenhänge zwischen Liquidustemperatur und Abkühlkurve sind dem Fachmann bekannt. Im Rahmen der Erfindung wird vorteilhafterweise nun die Liquidustemperatur als erster der Punkte der Abkühlkurve für die weitere Berechnung erfasst.

Vorzugsweise liegt der zweite der Punkte der Abkühlkurve der ersten Testschmelze an einem ersten Wendepunkt, der zeitlich vor einem lokalen Minimum und nach Durchschreiten der Liquidustemperatur der Abkühlkurve liegt. Dabei ist zu berücksichtigen, dass mit dem ersten Wendepunkt nicht der erste Wendepunkt der Abkühlkurve bezeichnet wird, sondern ein für die Messung interessanter erster Wendepunkt.

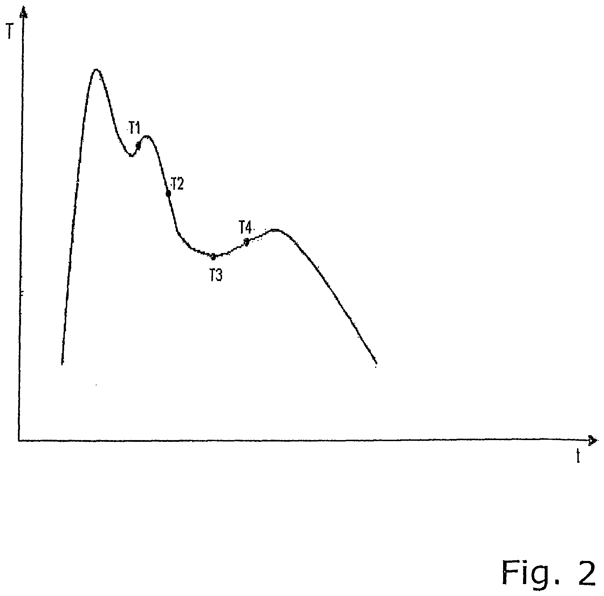

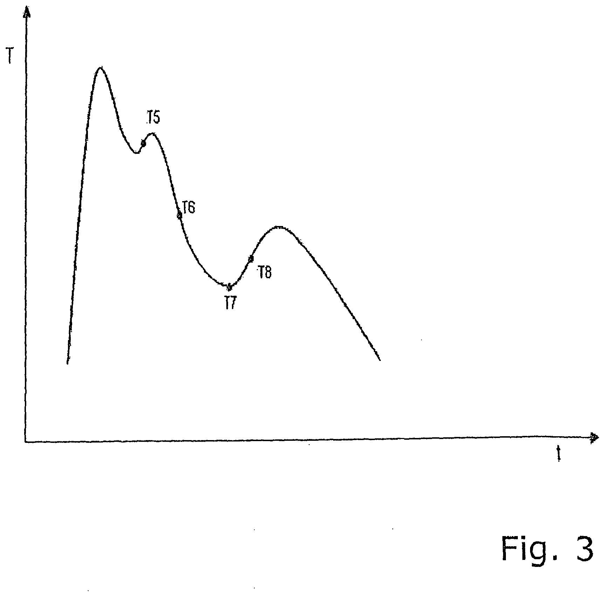

Vorteilhafterweise liegt der erste der Punkte der Abkühlkurve der zweiten Testschmelze bei der Liquidustemperatur der im zweiten Tiegel bzw. zweiten Kammer erstarrenden Schmelze. Der zweite Punkt der Abkühlkurve der zweiten Testschmelze liegt vorzugsweise an einem zeitlich hinter der Liquidustemperatur befindlichen zweiten Wendepunkt der Abkühlkurve. Weitere vorteilhafte Punkte aus der thermischen Analyse der ersten und zweiten Testschmelze sind in Figur 2 und Figur 3 mit entsprechenden Beschreibungen definiert.

Der Vorteil der Aufnahme der definierten Punkte ist, dass diese Punkte einen sehr genauen Schluss darauf zulassen, ob ausreichend Impfmittel zugegeben wurde oder ob gegebenenfalls zu viel Impfmittel zugegeben wurde. Auf diese Weise lässt sich Vermiculargraphit mit hoher Güte herstellen. Die Impfmittelformel weist mindestens zwei, bevorzugt vier Kontrollkoeffizienten auf, wobei insbesondere jedem aufgenommenen Punkt ein Kontrollkoeffizient zugeordnet ist. Als Impfmittelformel wird vorzugsweise folgende Funktion F3 für die Impfmittelmenge mit den Kontrollkoeffizienten C1, C2, C3 und C4 verwendet:

$F3 = C1*(T1) + C2*(T2) + C3*(T7) + C4*(T8)$ oder $F3 = C1*(T1) + C2*(T2) + C3*(T3) + C4*(T4) + C5*(T5) + C6*(T6) + C7*(T7) + C8*(T8)$. Hierbei bezeichnet T1, T2, T3 und T4 die genannten Punkte der Abkühlkurve der ersten Testschmelze, welche geimpft ist. Entsprechend sind die Bezeichnungen für die anderen Punkte, wobei T5, T6, T7 und T8 die Punkte der zweiten Testschmelze bezeichnen. Anstelle des oben genannten Probetiegels kann selbstverständlich auch jedes andere geeignete metallurgische Gefäß zur Auszeichnung einer Abkühlkurve für die Probeschmelzen verwendet werden.

Vorzugsweise werden die Kontrollkoeffizienten empirisch ermittelt, wobei besonders bevorzugt eine Reihe von Versuchsschmelzen hergestellt wird. Auf diese Weise kann vor Ausführung der weiteren Schritte des Verfahrens die oben bezeichnete Formel F3 empirisch ermittelt werden. Die Erfindung ist nicht darauf beschränkt, ausschließlich die hier genannten Punkte der Abkühlkurve zu verwenden. Ausdrücklich eingeschlossen sind andere Formeln, welche neben den hier genannten Punkten weitere Punkte berücksichtigen.

Bei vorteilhaften Ausführungsformen der Erfindung wird die Schwefelgehaltsformel empirisch ermittelt. Hierzu werden Versuchsschmelzen angesetzt, um zu bestimmen, welche Mengen strukturmodifizerender Agenzien zu einer Schmelze in Abhängigkeit des Schwefelgehalts zugegeben werden müssen, um Vermiculargraphit zu erhalten. Außerdem wird bei vorteilhaften Ausführungsformen der Erfindung die Sauerstoffaktivitätsformel empirisch ermittelt, um zu bestimmen, welche Mengen strukturmodifizierender Agenzien in Abhängigkeit der Sauerstoffaktivität einer Schmelze zugegeben werden müssen, um Vermiculargraphit zu erhalten. Dies bietet den Vorteil einer besonders zuverlässigen Bestimmung der notwendigen Mengen strukturmodifizierender Agenzien.

Vorzugsweise umfasst das Verfahren auch die Schritte des Abtrennens eines dritten Teils der Schmelze als dritte Teilschmelze, des Herstellens eines Plättchens aus der dritten Testschmelze, des Durchführens einer Keildruckprüfung an dem Plättchen und des Umrechnens der Keildruckfestigkeit in eine Zugfestigkeit anhand einer Festigkeitsformel. Dieses Vorgehen bietet insbesondere gegenüber Ultraschall-Messmethoden den Vorteil einer höheren Zuverlässigkeit. Wird bei den genannten bevorzugten Schritten festgestellt, dass die Zugfestigkeit nicht ausreichend ist, wird die Schmelze oder werden Produkte der Schmelze verworfen. Mit dem genannten Verfahren lassen sich Qualitätsschwankungen vermeiden. Bevorzugt wird die Festigkeitsformel insbesondere anhand von Schmelzen empirisch ermittelt. Diese Festigkeitsformel kann beispielsweise bezeichnet werden mit $F4 = C9*Rmkd+C10$, wobei C9 und C10 empirisch zu ermittelnde Konstanten bzw. Koeffizienten sind und Rmkd die Keildruckfestigkeit des Plättchens aus der dritten Testschmelze.

Weitere Vorteile des erfindungsgemäßen Verfahrens sind, dass bevorzugt bereits die Basisschmelze, die noch kein Magnesium enthält, beurteilt wird. Ein weiterer Vorteil ist, dass die Normaltemperatur-bezogene Sauerstoffaktivität und die Normaltemperatur-bezogene Schwefelaktivität unmittelbar in der Schmelze der Produktionsanlage gemessen werden und beispielsweise nicht indirekt gemessen wird, wie dies bei Testschmelzen mit alleiniger Beurteilung durch thermische Analyse der Fall ist. Auf diese Weise kann beispielsweise vermieden werden, dass eine Erhöhung des Kohlenstoff-Gehalts zur Vermeidung von untereutektischen Bereichen im Gussteil zwangsläufig zu einer Fehlbeurteilung der Schmelze durch thermische Analyse führen.

Ein weiterer unabhängiger Aspekt der Erfindung ist ein Gussteil, welches mit einem der oben genannten bevorzugten Verfahren hergestellt wurde.

Kurze Beschreibung der Zeichnungen

Im Folgenden wird die Erfindung genauer anhand der beigefügten Zeichnungen beschrieben, wobei die Figuren im Einzelnen zeigen:

Figur 1    ein schematisches Diagramm eines erfindungsgemäßen Verfahrensablaufs;

Figur 2    die Lage bevorzugter aufgenommener Punkte von einer Abkühlkurve; beispielsweise Tiegel mit Impfmittel

Figur 3    die Lage bevorzugt aufgenommener Punkte von einer weiteren Abkühlkurve; beispielsweise Tiegel ohne Impfmittel.

Genaue Beschreibung der Zeichnungen

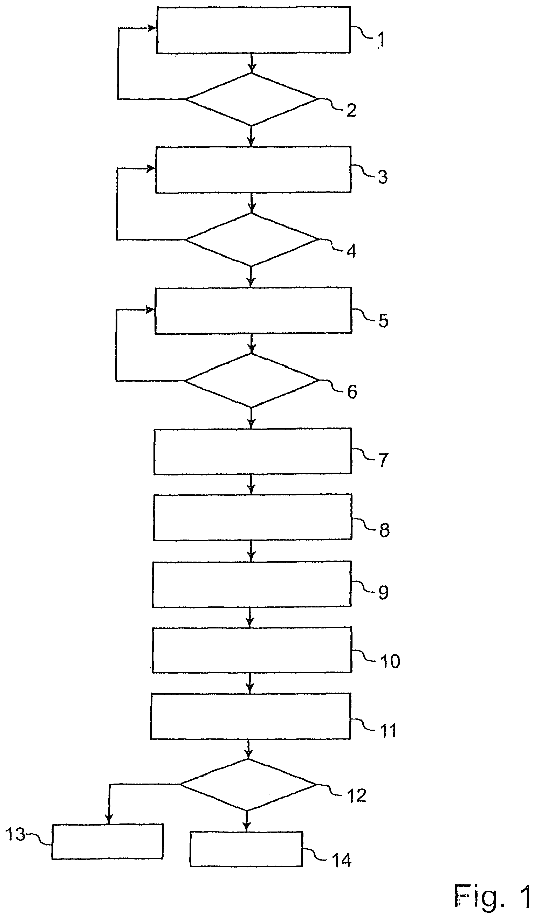

Figur 1 zeigt schematisch ein Diagramm eines erfindungsgemäßen Verfahrensablaufs. In einem anfänglichen oder initialen, in der Fig. 1 nicht dargestellten Schritt (Schritt 0) wird eine Schmelze hergestellt.

In Schritt 1 des erfindungsgemäßen Verfahrens zum Herstellen von Bauteilen aus Gusseisen mit Vermiculargraphit wird ein Schwefelgehalt der Schmelze ermittelt. Dann wird optional eine Versuchsreihe mit Proben einer/der Schmelze unternommen, in der eine Funktion F1 = F1 (S%) ermittelt wird, welche eine Menge strukturmodifizierenden Agens, beispielsweise Magnesium, bestimmt, die zu einer/der Schmelze in Abhängigkeit des Schwefelgehalts S% zuzugeben ist. Die Bestimmung von F1 erfolgt empirisch, indem einer ersten Probeschmelze (beispielsweise eine Probe aus einer großen Menge einer Schmelze) eine gewisse Menge strukturmodifizierendes Agens zugegeben wird und dann, nach einem Erstarren der Probeschmelze, eine Gefügebeurteilung und eine Messung der mechanischen Eigenschaften in Form eines Zugversuchs durchgeführt werden. Danach wird einer zweiten Probeschmelze eine andere Menge strukturmodifizierenden Agens zugegeben und es werden wieder die Eigenschaften (Gefügebestimmung, Zugversuche) bestimmt. Ggf. kann eine derartige Testreihe fortgesetzt werden, bis genügend Daten vorliegen, um Fl mit einer gewünschten Genauigkeit mittels eines mathematischen Verfahrens (beispielsweise je nach Datendichte: lineare Regression, Bestimmung mittels Polynom-Funktionen beliebiger Ordnung etc.) bestimmen zu können. Ist F1 einmal mit der gewünschten Genauigkeit bestimmt, so kann jeder beliebigen Schmelze die Schwefelgehalt-bedingte benötigte Menge des strukturmodifizierenden Agens durch eine Bestimmung des Schwefelgehalts und eine Anwendung von F1 zugegeben werden. Die Bestimmung der Funktion F1 ist wie vorstehend erwähnt optional und muß nicht für jede Batch oder Charge von Schmelze, die hergestellt wird, durchgeführt werden.

Danach wird dann basierend auf dem Schwefelgehalt der Schmelze und der bekannten Funktion F1 die zuzugebende Menge des strukrmodifizierenden Agens, welches der Schmelze aufgrund des Schwefelgehalts derselben zuzuführen ist, bestimmt.

Außerdem wird in Schritt 1 die Sauerstoffaktivität der Schmelze gemessen. Optional wird vorzugsweise auch die Schwefelaktivität der Schmelze gemessen. Aus den erhaltenen Daten für die Sauerstoffaktivität und ggf. auch für die Schwefelaktivität kann eine Aussage darüber getroffen werden, welche Menge eines strukturmodifizierenden Agens (dies kann dasselbe Agens sein, dessen Schwefelgehalt-bestimmte Zugabemenge mittels F1 ermittelt wird, es kann sich jedoch auch um ein beliebiges anderes strukturmodifizierends Agens handeln) der Schmelze zuzugeben ist, um aus der Schmelze Gusseisen mit einem bestimmten Anteil Vermiculargraphit zu erhalten. In anderen Worten gesagt, wird zusätzlich zu der benötigten Menge von strukturmodifizerendem Agens, welche durch den Schwefelgehalt bedingt ist, auf Basis der Sauerstoffaktivität und ggf. der Schwefelaktivität mittels einer zweiten Funktion F2 eine weitere Menge bestimmt, welche zu einem gewünschten Vermiculargraphit-Anteil führt.

Zur Bestimmung von F2 erfolgt, wie zur Bestimmung von Fl, optional (beispielsweise falls F2 noch nicht bekannt ist oder in gewissen, vorgegebenen Zeitabständen) eine empirische Versuchsreihe mit Probeschmelzen. Aus den erhaltenen Daten für die Sauerstoffaktivität und ggf. auch für die Schwefelaktivität wird die Funktion F2 = F2 (aO-Normaltemperatur, ggf. auch aS) bestimmt, welche in Abhängigkeit der Sauerstoffaktivität der Schmelze bezogen auf eine Normaltemperatur (aO-Normaltemperatur) und vorzugsweise auch der Schwefelaktivität (aS) die Menge strukturmodifizierenden Agens angibt, um aus der Schmelze Gusseisen mit einem bestimmten Anteil Vermiculargraphit zu erhalten.

In einem Schritt 2, welcher optional ist, und welcher dann ausgeführt wird, wenn in Schritt 1 F1 und/oder F2 bestimmt wird/werden, wird überprüft, ob jeweils bereits ausreichend Probeschmelzen im Schritt 1 durchgeführt wurden, um die Funktionen F1 und F2 mit der gewünschten Genauigkeit empirisch ermitteln zu können. Falls noch nicht genügend Probeschmelzen durchgeführt wurden, springt das Verfahren zum Schritt 1 zurück und es wird mit einer weiteren Schmelze, gegebenenfalls mit einem variierten Schwefel-Gehalt oder einem variierten Sauerstoffgehalt insbesondere der optionale Teil des Schritts 1, nämlich die Bestimmung von F1 und F2 vorzugsweise unter Berücksichtigung der bisherigen Ergebnisse erneut durchgeführt.

Die ermittelten Funktionen können z. B. folgendermaßen aussehen:

$$F1 = 300 * S\% + 1,2$$

F2 = 0,0209 * aO-Normaltemperatur - 4,126, bei einer Schwefelaktivität 0,002 % - 0,10 %, bei einer Pfannengröße von 1,2 t
oder

F2 = 0,0209 * aO-Normaltemperatur - 4,126 + 300 * Schwefelaktivität + 1,2, bei einer Pfannengröße von 1,2 t und einem Zylinderkurbelgehäuse in V-Bauweise von ca. 50 kg.

Während F1 lediglich vom Schwefelgehalt der Schmelze abhängig ist und keine Abhängigkeit von apparativen Eigenschaften der verwendeten Gieß-Vorrichtungen aufweist, sind die Parameter der Formel F2 abhängig von den Abkühlbedingungen, den Bauteilgeometrien, der Behandlungseinheit und dem Magnesiumgehalt des Behandlungsmittels. Daher fallen die Parameter für jede Gießerei unterschiedlich aus und werden empirisch ermittelt. Sobald also apparative Randbedingungen in der Gießerei geändert werden, muß wenigstens F2 neu bestimmt werden.

F1 und F2 können für jede Charge bzw. Batch einer Schmelze, d.h. bei jeder neuen Befüllung der Schmelzpfanne erneut ermittelt werden. Alternativ können beide Funktionen auch nur einmalig anfänglich ermittelt werden und, so lange keine Änderung der Randbedingungen eintritt, beibehalten werden. Dadurch kann die Herstellung der Gußteile beschleunigt werden, da nicht für jede Füllung der Schmelzpfanne eine aufwendige bestimmung der Parameter durchgeführt werden muss. F1 ist, wie obenstehend erwähnt ist, weitestgehend nur durch den Schwefelgehalt der Schmelze bestimmt, so dass eine erneute Bestimmung von F1 in der Regel auch bei einer Änderung der apparativen Randbedingungen entfallen kann.

Falls im Schritt 2 festgestellt wird, dass die Funktionen F1 und F2 ausreichend genau ermittelt wurden, wird im Schritt 3 die Funktion F3 ermittelt, welche angibt, welche Menge Impfmittel einer Schmelze zugeführt werden muss, um Zementit zu vermeiden. Auch die Bestimmung von F3 erfolgt in der beschriebenen Ausführungsform empirisch im Rahmen einer oder mehrerer Versuche bzw. Versuchsreihen. Dabei wird der Schritt 3 wiederum wiederholt ausgeführt, wobei bei gleich bleibender Zusammensetzung der Schmelze die Menge des versuchsweise zugegebenen Impfmittels variiert wird. Im Einzelnen werden der Schmelze zwei Testschmelzen entnommen, welche in zwei Tiegeln oder einen Tiegel mit zwei Kammern gefüllt werden. In einem Tiegel bzw. einer Kammer befindet sich eine bestimmte Menge Impfmittel und in dem zweiten Tiegel bzw. der zweiten Kammer befindet sich kein Impfmittel. Jeder Tiegel bzw. jede Kammer ist mit einem Thermoelement zur Aufnahme einer Abkühlkurve der jeweiligen Testschmelze ausgerüstet. Mit dem Thermoelement werden insbesondere bestimmte Punkte der Abkühlkurve aufgenommen. Welche Punkte dies sind, wird im Zusammenhang mit Figur 2 und Figur 3 genauer beschrieben. Die Funktion F3 setzt sich wie folgt zusammen:

$$F3 = C1*(T1) + C2*(T2) + C3*(T7) + C4*(T8)$$

oder

$$F3 = C1*(T1) + C2*(T2) + C3*(T3) + C4*(T4) + C5*(T5) + C6*(T6) + C7*(T7) + C8*(T8),$$

wobei C1, C2, C3, C4, C5, C6, C7 und C8 sogenannte Kontrollkoeffizienten darstellen, welche aus den gewonnenen Daten (Punkte der Abkühlkurve) mittels bekannter mathematischer Verfahren bestimmt werden.In der vorliegend beschriebenen Ausführungsform erfolgt die Bestimmung der Kontrollkoeffizienten mittels einer Regressionsanalyse (Methode der kleinsten Fehlerquadrate nach Gauß). Die Eingangsdaten für das Verfahren sind die jeweilige Impfmittelmenge und die Eigenschaften nach dem Erstarren, wie beispielsweise Gefüge und Festigkeiten.

In einer alternativen Ausführungsform des erfindungsgemäßen Verfahrens findet in die Impfmittelformel auch die Ableitung der Abkühlkurven nach der Zeit Eingang. F3 stellt sich in diesem Fall folgendermaßen dar:

$$F3 = C1*(T1) + C2*(T2) + C3*(T3) + C4*(T4) + C5*(T5) + C6*(T6) + C7*(T7) + C8*(T8) + A1*(T\_abgeleitet\_1) + A2*(T\_abgeleitet\_2) + A3*(T\_abgeleitet\_3) + A4*(T\_abgeleitet\_4) + A5*(T\_abgeleitet\_5) + A6*(T\_abgeleitet\_6) + A7*(T\_abgeleitet\_7) + A8*(T\_abgeleitet\_8) + A0,$$

wobei C1 bis C8 und A1 bis A8 Kontrollkoeffizienten sind, die wiederum mathematisch ermittelt werden. Im Verfahrensschritt zur Bestimmung der Konstanten C1 bis C 8 werden dabei auch die Konstanten A0 bis A8 bestimmt. T_abgeleitet_1 stellt den Wert der ersten Ableitung der Abkühlkurve im Punkt T1 dar, T_abgeleitet_2 stellt den Wert der ersten Ableitung der Abkühlkurve im Punkt T2 dar etc.

Ein konkretes Ausführungsbeispiel für eine Pfannengröße von 1,2 t und ein Zylinderkurbelgehäuse in V-Bauweise von ca. 50 kg lautet:

$$F3 = (55-(0,5*((-4549,697443542404 + 1,867350195741*(T7) + 2,168590658150*(T2)) + (-4235,031241115094 - 20,070820989952*(T\_abgeleitet\_6) - 8,618120173434*(T\_abgeleitet\_8) + 3,764445300581*(T1))))*0,2$$

Die restlichen Konstanten sind in bei diesen Parametern gleich Null. T_abgeleitet_6 = Wert der ersten Ableitung der Abkühlkurve im Punkt T6 T_abgeleitet_8 = Wert der ersten Ableitung der Abkühlkurve im Punkt T8 Die Konstanten sind Abhängig von der individuellen Anlagenausrüstung der Gießerei, den Abkühlbedingungen des Bauteils und dem verwendeten Impfmitteltyp.

Anschließend wird in einem Schritt 4 festgestellt, ob bereits ausreichend Versuche mit unterschiedlichen Mengen von Impfmittel durchgeführt wurden, um die richtige Menge Impfmittel mit der Funktion F3 bestimmen zu können. Sollten noch Versuche notwendig sein, wird der Schritt 3 wiederholt (Schritt 4), ansonsten springt das Verfahren zum Schritt 5.

Im Schritt 5 wird eine Formel F4 ermittelt, welche einen Zusammenhang zwischen der Zugfestigkeit des Gusseisens aus der Schmelze und einer Keildruckfestigkeit ermittelt. Hierzu wird von der mit dem strukturmodifizierenden Agens behandelten Schmelze eine kleine Menge in einen feuerfesten Tiegel abgeführt, dem nachfolgend dann ein Plättchen zur Keildruckprüfung entnommen wird. An dem Plättchen wird die Keildruckprüfung vorgenommen, um die Keildruckfestigkeit Rmkd zu ermitteln. Außerdem wird aus der gleichen Schmelze ein Probestab gegossen (gemäß ISO 16112) und anhand des Probestabs die Zugfestigkeit Rm des Gusseisens bestimmt. Wiederum wird der Schritt 5 ausreichend oft wiederholt, bis die Koeffizienten C9 und C10 der Funktion F4 = C9*Rmkd + C10, wobei C9 und C10 mit ausreichender Genauigkeit bestimmt werden können. Nach Prüfung, ob bereits ausreichend viele Proben vorgenommen wurden, fährt das Verfahren mit Schritt 6 fort.

In den anschließenden Verfahrensschritten wird nun mit den oben empirisch ermittelten Formeln eine Herstellung von Gusseisen vorgenommen. Im Schritt 7 wird eine Menge strukturmodifizierender Agens, im vorliegenden Fall des bevorzugten Ausführungsbeispiels Magnesium, durch Drahtinjektion in eine Schmelze zugegeben. Die Menge wird in Abhängigkeit des Schwefelgehalts der Schmelze bestimmt, wobei die oben ermittelte Funktion F1 = F1 (S %) verwendet wird.

Anschließend wird in einem Schritt 8 die Sauerstoffaktivität bezogen auf 1420 °C mit dem oben beschriebenen Verfahren der Vibrationslanze ermittelt. Gegebenenfalls wird auch die Schwefelaktivität ermittelt. Anschließend werden strukturmodifizierende Agenzien, im vorliegenden Fall des bevorzugten Ausführungsbeispiels Magnesium, mittels Drahtinjektion in die Schmelze zugegeben, wobei die Menge gemäß der Funktion F2 = F2 (aO-Normaltemperatur, ggf. auch aS) ermittelt wird. Diese Funktion F2 wurde oben im Schritt 1 für eine Normaltemperatur von 1420 °C ermittelt.

Anschließend werden in einem Schritt 9 zwei Testschmelzen abgetrennt, indem eine kleine Menge der Schmelze in zwei Tiegel bzw. einen Tiegel überführt wird; die Schmelze auf zwei Kammern aufgeteilt wird. Im ersten Tiegel bzw. in der ersten Kammer befindet sich für die dort befindliche erste Testschmelze eine bestimmte Menge Impfmittel, im konkreten Fall des bevorzugten Ausführungsbeispiels ein Eisen (Fe)-, Silizium (Si)-, Aluminium (Al)- haltiges Metallpulver. Im zweiten Tiegel bzw. in der zweiten Kammer für die zweite Testschmelze befindet sich kein Impfmittel. Wie im Schritt 4 beschrieben, sind beide Tiegel bzw. beide Kammern wiederum mit Thermoelementen ausgestattet, um bestimmte Punkte der Abkühlkurven der ersten und der zweiten Testschmelze zu messen. Die Punkte entsprechen wiederum den in der Figur 2 bzw. Figur 3 genauer bezeichneten Punkten. Aus den aufgenommenen Punkten wird anhand der Funktion F3 (siehe oben, Schritt 3) die Menge des benötigten Impfmittels bestimmt und diese Menge der Schmelze zugegeben. Hierzu wird die Funktion F3 verwendet.

Anschließend wird in einem Schritt 10 eine kleine Menge der Schmelze, die inzwischen mit den strukturmodifizierenden Agenzien und dem Impfmittel behandelt ist, in einen Tiegel überführt, der ein Erstarren der überführten Menge Schmelze zu einem Plättchen für eine Keildruckprüfung bewirkt.

Anschließend wird der Gussvorgang mit der behandelten Schmelze wie bekannt durchgeführt (Schritt 11), wobei die erstarrten Teile zunächst gesperrt und aufbewahrt werden, bis die Überprüfung des Plättchens aus Schritt 10 abgeschlossen ist.

Im Schritt 12 wird nun die Überprüfung des Plättchens des Schritts 10 durchgeführt, wobei an den Plättchen eine Keildruckfestigkeit bestimmt wird und gemäß der Funktion F4 in eine Zugfestigkeit umgerechnet wird. Falls die so ermittelte Zugfestigkeit der Probe, d. h. des Plättchens, ausreichend ist, wird in einem Schritt 13 die Weiterverarbeitung der im Schritt 11 eingelagerten und gesperrten Teile freigegeben. Ansonsten werden die gesperrten Teile erneut vergossen (Schritt 14).

In den Figuren 2 und 3 sind besondere Punkte von Abkühlkurven von Testschmelzen gekennzeichnet. Diese Punkte werden für ein erfindungsgemäßes Verfahren benötigt, insbesondere für das im Zusammenhang mit der Figur 1 beschriebene Verfahren, wobei insoweit auf die obige Figurenbeschreibung zu Figur 1 Bezug genommen wird.

In den Figuren 2 und 3 sind beispielhaft Abkühlkurven über die Zeit aufgetragen (Temperatur T über die Zeit t). Diese Kurven können für jede Testschmelze, insbesondere für die erste Testschmelze (siehe Figur 2) und die zweite Testschmelze (siehe Figur 3) unterschiedlich ausfallen. Das heißt, für jede Testschmelze erhält man eine derartige Abkühlkurve. Für die Testschmelzen werden jeweils die Punkte T1 bis T4 (Figur 2) bzw. T5 bis T8 (Figur 3) ermittelt, so dass im Falle der zwei Testschmelzen 8 Punkte berücksichtigt werden können.

Zu Figur 2: An der ersten Testschmelze (geimpft) wird der erste Punkt der Abkühlkurve aufgenommen, nämlich T1. Dieser erste Punkt T1 der Abkühlkurve der ersten Testschmelze entspricht der Liquidustemperatur und wird im dargestellten Beispiel an einem Wendepunkt der Abkühlkurve nach einem lokalen Minimum aufgenommen. Bei anderen Zusammensetzungen der Schmelze kann die Abkühlkurve anders ausfallen, insbesondere kann es passieren, dass an Stelle des lokalen Minimums lediglich ein Plateau o. ä. vor Erreichen der Liquidustemperatur auftritt. Der Fachmann wird jedoch keine Schwierigkeiten haben, den Punkt der Liquidustemperatur (T1) zu bestimmen. Der Punkt T2 der Abkühlkurve der ersten Testschmelze (geimpft) wird an einem ersten Wendepunkt aufgenommen, der zeitlich vor einem gegebenenfalls weiteren lokalen Minimum und zeitlich nach Durchschreiten der Liquidustemperatur der Abkühlkurve liegt. Die Temperatur T3 der Abkühlkurve der ersten Testschmelze (geimpft) befindet sich an einem lokalen Minimum der Abkühlkurve zeitlich nach dem Durchschreiten der Liquidustemperatur. Der Punkt T4 in der Abkühlkurve der ersten Testschmelze (geimpft) befindet sich an einem zeitlich hinter dem zuvor genannten lokalen Minimum liegenden zweiten Wendepunkt der Abkühlkurve.

Zu Figur 3: An der zweiten Testschmelze (ungeimpft) wird der erste Punkt der Abkühlkurve aufgenommen, nämlich T5. Dieser erste Punkt T5 der Abkühlkurve der zweiten Testschmelze entspricht der Liquidustemperatur und wird im dargestellten Beispiel an einem Wendepunkt der Abkühlkurve nach einem lokalen Minimum aufgenommen. Bei anderen Zusammensetzungen der Schmelze kann die Abkühlkurve anders ausfallen, insbesondere kann es passieren, dass an Stelle des lokalen Minimums lediglich ein Plateau o. ä. vor Erreichen der Liquidustemperatur auftritt. Der Fachmann wird jedoch keine Schwierigkeiten haben, den Punkt der Liquidustemperatur (T5) zu bestimmen. Der Punkt T6 der Abkühlkurve der zweiten Testschmelze (ungeimpft) wird an einem ersten Wendepunkt aufgenommen, der zeitlich vor einem gegebenenfalls weiteren lokalen Minimum und zeitlich nach Durchschreiten der Liquidustemperatur der Abkühlkurve liegt. Die Temperatur T7 der Abkühlkurve der zweiten Testschmelze (ungeimpft) befindet sich an einem lokalen Minimum der Abkühlkurve zeitlich nach dem Durchschreiten der Liquidustemperatur. Der Punkt T8 in der Abkühlkurve der zweiten Testschmelze (ungeimpft) befindet sich an einem zeitlich hinter dem zuvor genannten lokalen Minimum liegenden zweiten Wendepunkt der Abkühlkurve.

Aus den genannten Punkten T1, T2, T3, T4, T5, T6, T7 und T8 wird zunächst wie oben beschrieben im Schritt 3 empirisch die Formel F3 ermittelt. Dabei sind die Punkte T1, T2, T3 und T4 der Abkühlkurve der ersten Testschmelze, also der ersten Testschmelze mit Impfmitteln entnommen. Die Punkte T5, T6, T7 und T8 sind der Abkühlkurve der ungeimpften zweiten Testschmelze entnommen.

Für den weiteren Verlauf des Verfahrens, insbesondere den Schritt 9, bezeichnen dann die Punkte T1 bis T8 wiederum die entsprechenden Punkte, wobei im Schritt 9 die Menge des zu dosierenden Impfmittels bestimmt wird.

Im Rahmen der Erfindung sind Abwandlungen der oben beschriebenen bevorzugten Ausführungsform möglich. Der Schutzbereich wird durch die Ansprüche bestimmt und ist keinesfalls auf die beschriebene bevorzugte Ausführungsform zu reduzieren.

**Patentansprüche**

1. Verfahren zur Herstellung von Gusseisen mit Vermiculargraphit mit den Schritten:

  - Herstellen einer Schmelze,
  - Ermitteln eines Schwefelgehalts der Schmelze und Ermitteln einer Normaltemperatur-bezogenen Sauerstoffaktivität der Schmelze, sowie Bestimmung einer Menge eines zuzugebenden strukturmodifizierenden Agens oder mehrerer zuzugebender strukturmodifizierender Agenzien auf Basis des Schwefelgehalts der Schmelze und der Normaltemperatur-bezogenen Sauerstoffaktivität der Schmelze,
  - Abtrennen zweier Teile der Schmelze als erste und zweite Testschmelze, wobei der ersten Testschmelze vor Aufnahme der Punkte der Abkühlkurve Impfmittel zugegeben wird, so dass die erste Testschmelze geimpft und die zweite Testschmelze ungeimpft ist und Ermitteln von mindestens zwei Punkten der jeweiligen Abkühlkurve beider Testschmelzen, und
  - Zugeben einer Impfmittelmenge eines Impfmittels in Abhängigkeit von den ermittelten Punkten der Abkühlkurven anhand einer Impfmittelformel, welche mindestens zwei Kontrollkoeffizienten aufweist, die empirisch ermittelt werden.

2. Verfahren nach Anspruch 1,
  **gekennzeichnet durch** den weiteren Schritt:
  Ermitteln einer Schwefelaktivität der Schmelze.

3. Verfahren nach Anspruch 1 oder 2,
  **gekennzeichnet durch** den weiteren Schritt:
  Dosieren einer Agenzienmenge von strukturmodifizierenden Agenzien in Abhängigkeit von dem Schwefelgehalt und/oder der Schwefelaktivität anhand einer Schwefelgehaltsformel und/oder von der Normaltemperatur-bezogenen Sauerstoffaktivität anhand einer Sauerstoffaktivitätsformel und Zugeben der Agenzienmenge.

4. Verfahren nach einem der vorhergehenden Ansprüche,
**dadurch gekennzeichnet, dass**
ein Quasi-Einkomponentendesoxidationsmittel als strukturmodifizierendes Agens verwendet wird.

5. Verfahren nach einem der vorhergehenden Ansprüche,
**dadurch gekennzeichnet, dass**
ein Mehrkomponentendesoxidationsmittel als strukturmodifizierendes Agens verwendet wird.

6. Verfahren nach einem der vorhergehenden Ansprüche,
**dadurch gekennzeichnet, dass**
die Normaltemperatur-bezogene Sauerstoffaktivität der Schmelze direkt und/oder unter Verwendung einer Vibrationslanze gemessen wird.

7. Verfahren nach einem der vorhergehenden Ansprüche,
**dadurch gekennzeichnet, dass**
der ersten und der zweiten Testschmelze vor Aufnahme der Punkte der Abkühlkurve unterschiedliche Mengen Impfmittel zugegeben werden.

8. Verfahren nach einem der vorhergehenden Ansprüche,
**dadurch gekennzeichnet, dass**
der erste der Punkte der Abkühlkurve der ersten Testschmelze der Liquidustemperatur der Abkühlkurve entspricht und/oder der zweite der Punkte der Abkühlkurve der ersten Testschmelze an einem ersten Wendepunkt liegt, der zeitlich vor einem lokalen Minimum und nach Durchschreiten der Liquidustemperatur der Abkühlkurve liegt.

9. Verfahren nach einem der vorhergehenden Ansprüche,
**dadurch gekennzeichnet, dass**
der erste Punkt der Abkühlkurve der zweiten Testschmelze der Liquidustemperatur der Abkühlkurve entspricht und/oder der zweite Punkt der Abkühlkurve der zweiten Testschmelze an einem zeitlich hinter der Liquidustemperatur befindlichen zweiten Wendepunkt der Abkühlkurve liegt.

10. Verfahren nach einem der vorhergehenden Ansprüche,
**dadurch gekennzeichnet, dass**
die Impfmittelformel vier Kontrollkoeffizienten aufweist.

11. Verfahren nach einem der vorhergehenden Ansprüche,
**dadurch gekennzeichnet, dass**
die Schwefelgehaltsformel und/oder die Sauerstoffaktivitätsformel empirisch ermittelt werden.

12. Verfahren nach einem der vorhergehenden Ansprüche,
**gekennzeichnet durch**
die Schritte: Abtrennen eines dritten Teils der Schmelze als dritte Testschmelze, Herstellen eines Plättchens aus der dritten Testschmelze, Durchführen einer Keildruckprüfung an dem Plättchen und Umrechnen der Keildruckfestigkeit in eine Zugfestigkeit anhand einer Festigkeitsformel.

13. Verfahren nach einem der vorhergehenden Ansprüche, insbesondere nach Anspruch 12,
**dadurch gekennzeichnet, dass**
die Festigkeitsformel empirisch ermittelt wird.


**Claims**

1. A method for producing cast iron with vermicular graphite with the following steps:

   - producing a melt
   - determining a sulfur content of the melt and determining a normal temperature related oxygen activity of the melt, as well as determining an amount of a structure-modifying agent to be added or of several structure-modifying agents to be added, based on the sulfur content of the melt and the normal temperature related oxygen activity of the melt,
- separating two parts of the melt as a first and a second test melt, with an inoculant being added to the first test melt before recording the points of the cooling curve, so that the first test melt is inoculated and the second test melt is not inoculated and determining at least two points of the respective cooling curve of both test melts, and
- adding an inoculant amount of an inoculant depending on the determined points of the cooling curve based on an inoculant formula, which comprises at least two controlling coefficients, which are determined empirically.

2. The method according to claim 1,
**characterized by** the further step:
determining a sulfur activity of the melt.

3. The method according to claim 1 or 2,
**characterized by** the further step:
dosing an amount of agent of structure-modifying agents in dependency of the sulfur content and/or the sulfur activity based on a sulfur content formula and/or on the normal temperature related oxygen activity based on an oxygen activity formula and adding the agent amount.

4. The method according to one of the preceding claims,
**characterized in that**
a quasi one component deoxidizer is used as the structure-modifying agent.

5. The method according to one of the preceding claims,
**characterized in that**
a more component deoxidizer is used as the structure-modifying agent.

6. The method according to one of the preceding claims,
**characterized in that**
the normal temperature related oxygen activity of the melt is measured directly and/or by using a vibrating lance.

7. The method according to one of the preceding claims,
**characterized in that**
different amounts of inoculants are added to the first and the second test melt before recording the points of the cooling curve.

8. The method according to one of the preceding claims,
**characterized in that**
the first point of the points of the cooling curve of the first test melt corresponds with the liquidus temperature of the cooling curve and/or the second point of the points of the cooling curve of the first test melt lies at a first turning point, which lies before a local minimum in terms of time and after passing the liquidus temperature of the cooling curve.

9. The method according to one of the preceding claims,
**characterized in that**
the first point of the cooling curve of the second test melt corresponds with the liquidus temperature of the cooling curve and/or **in that** the second point of the cooling curve of the second test melt lies at a second turning point of the cooling curve after the liquidus temperature in terms of time.

10. The method according to one of the preceding claims,
**characterized in that**
the inoculant formula comprises four controlling coefficients.

11. The method according to one of the preceding claims,
**characterized in that**
the sulfur content formula and/or the oxygen activity formula are determined empirically.

12. The method according to one of the preceding claims,
**characterized by**

the steps: separating a third part of the melt as a third test melt, producing a small plate from the third test melt, carrying out a wedge pressure test at the small plate and converting the wedge pressure resistance into a tensile strength based on a rigidity formula.

**13.** The method according to one of the preceding claims, particularly according to claim 12,
**characterized in that**
the rigidity formula is determined empirically.


**Revendications**

**1.** Procédé de fabrication de fonte contenant du graphite vermiculaire avec les étapes :

- de fabrication d'une masse fondue,
- de détermination d'une teneur en soufre de la masse fondue et d'une activité de l'oxygène en fonction d'une température normale de la masse fondue, ainsi que de détermination d'une quantité d'un agent de modification de la structure ajouté ou de plusieurs agents de modification de la structure ajoutés sur la base de la teneur en soufre de la masse fondue et de l'activité de l'oxygène en fonction de la température normale de la masse fondue,
- de séparation de deux parties de la masse fondue sous forme de première et de seconde masse fondue de test, dans laquelle un inoculant est ajouté à la première masse fondue de test avant l'enregistrement des points de la courbe de refroidissement de sorte que la première masse fondue de test est vaccinée et la seconde masse fondue de test est non vaccinée, et de détermination d'au moins deux points de la courbe de refroidissement respective des deux masses fondues de test, et
- d'addition d'une quantité d'inoculant d'un inoculant en fonction des points déterminés des courbes de refroidissement à l'aide d'une formule d'inoculant, laquelle présente au moins deux coefficients de contrôle qui sont déterminés empiriquement.

**2.** Procédé selon la revendication 1,
**caractérisé par**
l'étape suppplémenataire :
de détermination d'une activité du soufre de la masse fondue.

**3.** Procédé selon la revendication 1 ou la revendication 2,
**caractérisé par**
l'étape suppplémenataire :
dosage d'une quantité d'agent des agents de modification de la structure en fonction de la teneur en soufre et/ou de l'activité du soufre à l'aide d'une formule de teneur en soufre et/ou de l'activité de l'oxygène en fonction de la température normale à l'aide d'une formule d'activité de l'oxygène et d'addition d'une quantité d'agent.

**4.** Procédé selon l'une des revendications précédentes,
**caractérisé en ce que**
un produit de désoxydation quasi mono composant est employé en tant qu'agent de modification de structure.

**5.** Procédé selon l'une des revendications précédentes,
**caractérisé en ce que**
un produit de désoxydation multi composant est employé en tant qu'agent de modification de structure.

**6.** Procédé selon l'une des revendications précédentes,
**caractérisé en ce que**
l'activité de l'oxygène en fonction de la température normale de la masse fondue est mesurée directement et/ou moyennant l'emploi d'une lance de vibration.

**7.** Procédé selon l'une des revendications précédentes,
**caractérisé en ce que**
diverses quantités d'inoculant sont ajoutées aux première et seconde masses fondues de test avant l'enregistrement des points de la courbe de refroidissement.

**8.** Procédé selon l'une des revendications précédentes,

**caractérisé en ce que**

le premier des points de la courbe de refroidissement de la première masse fondue correspond à la température du liquidus de la courbe de refroidissement et/ou le deuxième des points de la courbe de refroidissement de la première masse fondue se situe au niveau d'un premier point d'inflexion qui se situe dans le temps avant un minimum local et après l'intersection de la température de liquidus de la courbe de refroidissement.

9. Procédé selon l'une des revendications précédentes,
   **caractérisé en ce que**
   le premier point de la courbe de refroidissement de la seconde masse fondue de test correspond à la température du liquidus de la courbe de refroidissement de la seconde masse fondue de test à un deuxième point d'inflexion de la courbe de refroidissement se trouvant dans le temps après la température du liquidus.

10. Procédé selon l'une des revendications précédentes,
    **caractérisé en ce que**
    la formule de l'inoculant présente quatre coefficients de contrôle.

11. Procédé selon l'une des revendications précédentes,
    **caractérisé en ce que**
    la formule de la teneur en soufre et/ou la formule de l'activité de l'oxygène sont déterminées empiriquement.

12. Procédé selon l'une des revendications précédentes,
    **caractérisé par**
    les étapes : de séparation d'une troisième partie de la masse fondue sous forme de troisième masse fondue de test, de fabrication d'une lamelle à partir de la troisième masse fondue de test, d'exécution d'un test de pression en coin sur la lamelle et la conversion par le calcul de la résistance à la compression en coin en résistance à la traction à l'aide d'une formule de rigidité.

13. Procédé selon l'une des revendications précédentes, notamment selon la revendication 12,
    **caractérisé en ce que**
    la formule de la rigidité est déterminée empiriquement.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5758706 A